# FASCICULE DE BREVET EUROPEEN

(11) **EP 1 141 747 B1**
(45) Date de publication et mention de la délivrance du brevet: **18.09.2002**
(21) Numéro de dépôt: 99958322.2
(22) Date de dépôt: 14.12.1999
(51) Int. Cl.: G01S 13/90, G01S 13/87

(54) **PROCEDE SATELLITAIRE POUR ETABLIR PAR L'INTER-FEROMETRIE RADAR UN MODELE NUMERIQUE DE TERRAIN**
SATELLITENVERFAHREN ZUR ERZEUGUNG EINES DIGITALEN GELÄNDEMODELLS MITTELS RADARINTERFEROMETRIE
SATELLITE-BASED METHOD FOR SETTING UP BY RADAR INTERFEROMETRY A DIGITAL MODEL OF TERRAIN

(30) Priorité: 15.12.1998 FR 9815814
(43) Date de publication de la demande: 10.10.2001
(73) Titulaire: CENTRE NATIONAL D'ETUDES SPATIALES, 75001 Paris (FR)
(72) Inventeur: ADRAGNA, Frédéric, 31650 Saint-Orens-de-Gameville (FR)
(74) Mandataire: Schrimpf, Robert
(86) Numéro de dépôt international: FR9903130
(87) Numéro de publication internationale: WO00036434

(56) Documents cités:
- ZEBKER H A ET AL: "MAPPING THE WORLD'S TOPOGRAPHY USING TADAR INTERFEROMETRY: THE TOPSAT MISSION" PROCEEDINGS OF THE IEEE, vol. 82, no. 12, 1 décembre 1994 (1994-12-01), pages 1774-1786, XP000492720 ISSN: 0018-9219 cité dans la demande
- MOCCIA A ET AL: "A TETHERED INTERFEROMETRIC SYNTHETIC APERTURE RADAR (SAR) FOR A TOPOGRAPHIC MISSION" IEEE TRANSACTIONS ON GEOSCIENCE AND REMOTE SENSING,US,IEEE INC. NEW YORK, vol. 30, no. 1, 1 janvier 1992 (1992-01-01), pages 103-109, XP000248539 ISSN: 0196-2892

## Description

L'invention concerne un procédé et un système satellitaire simple, fiable et opérationnel pour établir un Modèle Numérique de Terrain (MNT) de tout ou partie du globe à très haute résolution.

L'invention est basée sur l'utilisation de l'imagerie radar haute résolution qui présente des avantages connus (tout-temps, localisation absolue,...) et de la technique interférométrique qui présente également des avantages notoires (très grande précision, la simplicité de mise en oeuvre) mais qui souffre habituellement de limitations rédhibitoires : bruit de phase introduit par la propagation hyperfréquence à travers l'atmosphère et l'ionosphère, perte de cohérence sur la végétation et les reliefs importants.

L'invention vise à éliminer complètement ces limitations et à permettre d'atteindre des résolutions horizontales et altimétrique inférieures à 5m, par exemple 2m en horizontal et 0, 5m en vertical, ou même inférieures.

Ces hautes résolutions et la localisation absolue permettent des applications avantageuses en cartographie mondiale et en topographie.

On a proposé des systèmes satellitaires pour établir par interférométrie radar un modèle numérique de terrain de tout ou partie du globe, constitué de deux satellites volant en formation sur deux orbites proches et munis de radars respectifs à ouverture synthétique, comme cela est rappelé par exemple dans l'article "Interférométrie Radar : Principe, Applications et Limitations" de Frédéric ADRAGNA (Dec. 1997) et dans l'article "Mapping the World's Topography Using Radar Interferometry : the Topsar Mission" de Howard A. ZEBKER et al. (IEEE Proceeding, vol. 82, n°12, Déc. 1994).

La présente invention vise à définir un procédé et un système satellitaire à deux satellites volant en formation, mais qui ne nécessite aucune synchronisation des signaux des radars des deux satellites.

On y parvient selon l'invention en munissant chaque satellite d'un radar à haute résolution'et à ouverture synthétique et en faisant orbiter les deux satellites l'un derrière l'autre, en sorte que leurs radars observent indépendamment l'une de l'autre une même bande de terrain sous une incidence d'au moins 40°, avec un intervalle de temps d'au plus 10 secondes, de préférence d'au plus 4 secondes, de préférence d'au moins 2 secondes, entre leurs observations respectives.

La limite inférieure dudit intervalle dépend de la longueur d'onde et de la résolution des radars.

La Terre ayant tourné pendant ledit intervalle, il existe un décalage orbital latéral (ajustable).

Ce décalage crée un léger effet stéréo qui permet d'obtenir le relief de la terre grâce à la technique interférométrique.

Les deux satellites peuvent avantageusement comporter chacun un radar émetteur - récepteur.

De préférence, les deux radars sont identiques.

L'incidence d'observation est de préférence fixée à un angle de l'intervalle 40 - 60°.

Dans une réalisation typique, chaque radar imageur (embarqué sur une plate-forme de type Proteus) est simplifié au maximum : une seule incidence, une antenne fixe et passive donc légère (5 x 1m, 50kg), un seul mode de fonctionnement, un échantillonnage simple (codage BAQ2 : 2 x 2Bits par pixel), peu de puissance, mais haute résolution (2m).

A bord une bonne capacité mémoire est nécessaire avec un système de navigation précis (éventuellement autonome), utile pour le contrôle orbital (précision requise : 50 m) et pour la restitution fine de l'orbite (nécessaire pour la localisation absolue du produit).

Le système est opérationnel du fait que les limitations habituelles de l'interférométrie sont éliminées :
- les changements intervenant habituellement au sol sont inexistants, sauf probablement en cas de très forte pluie et les jours de grand vent sur la forêt (mais détecté par la perte de cohérence).
- L'indice de réfraction de l'atmosphère ne varie pas pendant ce temps très court, sauf événement météo exceptionnel (probabilité inférieure à 10 minutes/an).
- La haute résolution (large bande passante) combinée à la forte incidence permet de s'affranchir des problèmes de perte de cohérence sur les zones montagneuse (pentes).

L'altitude d'ambiguïté dépendra de l'écartement choisi entre les orbites, et pourra facilement être modifiée au cours de la vie du système, en fonction du besoin de précision altimétrique.

L'invention présente des avantages très importants du fait que :
- les interférogrammes haute résolution et très cohérents obtenus peuvent être traduits de façon automatique en élévation,
- l'utilisation d'acquisitions en orbites montantes et descendantes permet de localiser de manière absolue, en trois dimensions, le produit final, sans points d'appuis extérieurs (sans opérateurs).

Enfin, la "cohérence" de l'interférogramme permet de caractériser le type de sol observé (et'de détecter les zones où la mesure interférométrique n'est pas fiable) :
- cohérence = 0 : mer, lac, rivière (détection des traits de côte...)
- cohérence faible : vents violents ou problème divers (MNT non fiable : invalidé)
- cohérence moyenne : (rétrodiffusion volumique) forêts,...
- cohérence bonne : couvert végétal peu dense, villes,...
- cohérence = 100 % : sol nu ou végétation rase

Outre les points forts classiques de l'interférométrie radar (facilité algorithmique de mise en oeuvre, fiabilité de la mesure, localisation absolue sans points d'appuis extérieurs, etc...), le système de l'invention présente les avantages suivants :
- la haute résolution permet la mesure de la hauteur de bâtiments ou d'arbres isolés. Si l'altitude d'ambiguïté est bien choisie (80 - 100m), aucun déroulement de franges n'est nécessaire.
- La mesure du 3D en milieu urbain semble accessible malgré les réflexions multiples et les repliements géométriques.

Il suffirait de faire des acquisitions en mode "Spot Light" (par basculement AV/AR de la plate-forme) pour être exactement dans la même configuration que le système aéroporté américain IFSARE dont la résolution est de 2 x 0.7m.

L'avantage par rapport à la stéréo classique est qu'il n'y a pas de déformation géométrique entre les deux images.

La mise en correspondance des pixels est immédiate et c'est uniquement l'information de phase qui donne l'altitude.

Enfin, par filtrage de l'interférogramme, il est possible de différencier les parties verticales des parties horizontales.

### EXEMPLE :

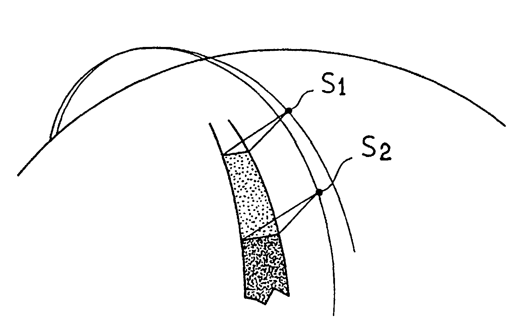

Le système de l'invention comprend deux mini-satellites Si, S2 (fig. 1) qui orbitent l'un derrière l'autre, à 15 - 30km de distance environ (2 - 4 secondes).

La précision relative sur la trace est inférieure ou égale à 50 m ce qui ne présente pas de difficulté.

La restitution de l'orbite devant être aussi fine que possible, les satellites comportent des systèmes de navigation précis (GPS, Doris,...).

Les satellites sont équipés de radars émetteur - récepteur qui sont identiques.

Pour simplifier le segment sol, on peut envisager un pilotage autonome des satellites.

Enfin, il est souhaitable que les Plates-Formes des satellites soient conçues pour pouvoir faire varier l'angle d'incidence et autoriser le mode (basculement AV/AR) localement (pour le 3D urbain).
- Altitude : 500km,
- Incidence de prise de vue : 50° (pour éviter les "Layover". Les zones d'ombres éventuelles seront comblées par l'utilisation croisée des orbites montantes et descendantes)
- Longueur d'antenne : 5m x 1m (X) ou 5m x 2m (C)
- Longueur d'onde : Bande X (ou bande C pour une meilleure cohérence)
- Puissance rayonnée : environ 4 kW crête (Neσ0 ≈ -18 dB)
- Puissance moyenne consommée : environ 1 500 Watts (quelques minutes par orbite)
- Résolution des images : 2m x 2m (monovue) ; 2m x 0.5m (Spot Light)
- Codage des données brutes radar : BAQ2 : 2 x 2 bits/pixel (type Magellan)
- Fauchée : 50 km (liée à la résolution souhaitée, et au débit possible)
- Débit instrument après codage : 350 Mbits/s,
- Débit télémesure : 200 Mbits/s (un satellite après l'autre)
- Orbite : héliosynchrone, du type 6h - 18h (maximisation de l'énergie et simplification de la plate-forme).

## Revendications

1. Procédé pour établir par interférométrie radar un modèle numérique de terrain à très haute résolution de tout ou partie du globe terrestre, au moyen de deux satellites (S1, S2) volant en formation sur deux orbites proches et munis de radars respectifs, **caractérisé en ce qu'**on munit chaque satellite d'un radar à haute résolution et à ouverture synthétique et **en ce qu'**on fait orbiter les deux satellites l'un derrière l'autre, en sorte que leurs radars observent indépendamment l'un de l'autre une même bande de terrain sous une incidence d'au moins 40°, avec un intervalle de temps d'au plus 10 secondes entre leurs observations respectives.

2. Procédé selon la revendication 1, dans lequel ledit intervalle est d'au plus 4 secondes.

3. Procédé selon la revendication 1 ou 2, dans lequel ledit intervalle est d'au moins 2 secondes.

4. Procédé selon l'une des revendications 1 à 4, dans lequel on règle l'incidence d'observation à un angle de la gamme 40 - 60°.

5. Procédé selon l'une des revendications 1 à 3, dans lequel on munit les deux satellites (Si, S2) d'un radar émetteur - récepteur.

6. Procédé selon l'une des revendications 1 à 5, dans lequel on munit les deux satellites de radars identiques.

7. Système satellitaire pour la mise en oeuvre d'un procédé selon l'un des revendications 1 à 6, **caractérisé en ce qu'**il comprend deux satellites (S1, S2) équipés de radars respectifs à haute résolution et à ouverture synthétique, réglés pour observer indépendamment l'un de l'autre une même bande de terrain sous une incidence d'au moins 40°, les satellites étant programmés pour que les radars observent la même bande de terrain avec un intervalle de temps d'au plus dix secondes et d'au moins deux secondes.

8. Système satellitaire selon la revendication 7, dont chaque radar est émetteur - récepteur.

9. Système satellitaire selon la revendication 8 dont les deux radars sont identiques.

## Claims

1. A method of using radar interferometry to establish a digital terrain model of very high resolution for all or part of the terrestrial globe, by means of two satellites (S1, S2) flying in formation on two orbits that are close and provided with respective radars, the method being **characterized in that** each satellite is provided with a high resolution synthetic aperture radar, and **in that** the two satellites are caused to orbit one behind the other so that their radars observe the same strip of ground independently of each other at an incidence of at least 40°, with a time interval of not more than 10 seconds between their respective observations.

2. A method according to claim 1, in which said time interval is not more than 4 seconds.

3. A method according to claim 1 or claim 2, in which said time interval is not less than 2 seconds.

4. A method according to any one of claims 1 to 4, in which the observation angle of incidence is set to an angle in the range 40° to 60°.

5. A method according to any one of claims 1 to 3, in which each satellite (S1, S2) is provided with a respective radar transceiver.

6. A method according to any one of claims 1 to 5, in which both satellites are provided with identical radars.

7. A satellite system for implementing a method according to any one of claims 1 to 6, **characterized in that** it comprises two satellites (S1, S2) fitted with respective high resolution synthetic aperture radars, adjusted to observe a common strip of terrain independently of each other at an angle of incidence of at least 40°, the satellites being programmed so that the radars observe the same strip of terrain at a time interval of not more than 10 seconds and not less than 2 seconds.

8. A satellite system according to claim 7, in which each radar is a transceiver.

9. A satellite system according to claim 8, in which both radars are identical.

## Patentansprüche

1. Verfahren zur Erzeugung eines digitalen Geländemodells mit sehr hoher Auflösung der gesamten oder eines Teils der Erdkugel über RadarInterferometrie mittels zweier Satelliten (S1, S2), die in Formation entlang zweier benachbarter Umlaufbahnen fliegen und mit entsprechenden Radaren ausgestattet sind, **dadurch gekennzeichnet, daß** man jeden Satelliten mit einem Radar hoher Auflösung und synthetischer Öffnung ausstattet und daß man die beiden Satelliten hintereinander umlaufen läßt, derart, daß ihre Radare unabhängig voneinander einen gleichen Geländestreifen unter einem Anstellwinkel von wenigstens 40° beobachten, einem Zeitintervall von höchstens 10 Sekunden zwischen ihren jeweiligen Beobachtungen.

2. Verfahren nach Anspruch 1, bei dem das Intervall höchstens 4 Sekunden beträgt.

3. Verfahren nach Anspruch 1 oder 2, bei dem das Intervall wenigstens 2 Sekunden beträgt.

4. Verfahren nach einem der Ansprüche 1 bis 4, bei dem der Beobachtungswinkel auf einen Winkel im Bereich von 40 - 60° eingestellt wird.

5. Verfahren nach einem der Ansprüche 1 bis 3, bei dem man die beiden Satelliten (S1, S2) mit einem Sender-Empfänger-Radar ausstattet.

6. Verfahren nach einem der Ansprüche 1 bis 5, bei dem man die beiden Satelliten mit identischen Radaren ausstattet.

7. Satellitensystem für die Durchführung eines Verfahrens nach einem der Ansprüche 1 bis 6, **dadurch gekennzeichnet, daß** es zwei Satelliten (S1, S2) umfaßt, die mit jeweiligen Radaren hoher Auflösung und synthetischer Öffnung ausgestattet sind, und so eingestellt sind, daß sie unabhängig voneinander einen gleichen Geländestreifen unter einem Anstellwinkel von wenigstens 40° beobachten, wobei die Satelliten derart programmiert sind, daß die Radare den gleichen Geländestreifen mit einem Zeitintervall von höchstens 10 Sekunden und wenigstens 2 Sekunden beobachten.

8. Satellitensystem nach Anspruch 7, bei dem jeder Radar ein Sender-Empfänger ist.

9. Satellitensystem nach Anspruch 8, bei dem die beiden Radare identisch sind.
